# EUROPÄISCHE PATENTSCHRIFT

(11) **EP 3 566 271 B1**
(45) Veröffentlichungstag und Bekanntmachung des Hinweises auf die Patenterteilung: **27.05.2020**
(21) Anmeldenummer: 18718672.1
(22) Anmeldetag: 22.03.2018
(51) Int. Cl.: H02B 1/38, H02B 1/01, B23K 11/14, H02B 1/16

(54) **SCHALTSCHRANKTÜR FÜR EIN SCHALTSCHRANKGEHÄUSE**
DOOR FOR AN ELECTRICAL CABINET
PORTE POUR ARMOIRE ÉLECTRIQUE

(30) Priorität: 21.04.2017 DE 102017108575
(43) Veröffentlichungstag der Anmeldung: 13.11.2019
(73) Patentinhaber: Rittal GmbH & Co. KG, 35745 Herborn (DE)
(72) Erfinder: SCHAUWECKER, Uwe, 35745 Herborn-Hörbach (DE); NEUHOF, Markus, 35630 Ehringshausen-Niederlemp (DE); BLOH, Achim, 35644 Hohenahr-Ahrdt (DE)
(74) Vertreter: Angerhausen, Christoph
(86) Internationale Anmeldenummer: PCT/DE2018/100257
(87) Internationale Veröffentlichungsnummer: WO 2018/192612

(56) Entgegenhaltungen:
- EP-A1- 0 840 414
- WO-A1-2013/075684
- DD-A1- 220 786
- DE-A1- 2 402 110
- JP-A- H07 312 807
- JP-U- S5 387 838

## Beschreibung

Die Erfindung geht aus von einer Schaltschranktür für ein Schaltschrankgehäuse, wobei die Schaltschranktür an der Innenseite ihres Türblatts mindestens ein Verstärkungsprofil aufweist. Eine derartige Schaltschranktür ist aus der DE 10 2008 019 317 A1 und aus der EP 0 840 414 A1 bekannt.

Bei den aus dem Stand der Technik bekannten Schaltschranktüren ist das Verstärkungsprofil häufig entweder als ein Türrohrahmen mit rechteckigem Querschnitt oder als eine Z-Kantung ausgebildet, die an der Innenseite der Schaltschranktür aufgeschraubt oder aufgeschweißt sind. Für das Aufschrauben eines Türrohrrahmens an der Innenseite der Schaltschranktür ist es erforderlich, dass zunächst auf der Innenseite, der Schaltschranktür Schweißbolzen aufgebracht werden, über welche der Türrohrahmen über fluchtende Durchlässe an gegenüberliegenden Profilseiten des Türrohrahmens aufgesetzt und mit einer Mutter gesichert wird. Mithin sind die Herstellung und die Montage des Türrohrrahmens aufwendig und damit kostenintensiv.

Darüber hinaus sind die aus dem Stand der Technik bekannten Verstärkungsprofile über flächige Auflageseiten auf der Innenseite der Schaltschranktür aufgebracht, so dass sich aufgrund des Kapillareffekts beim Lackiervorgang Lackierrückstände zwischen dem Türrohrahmen und dem Türblatt einlagern können, so dass die Schaltschranktür in den betreffenden Bereichen korrosionsanfällig ist.

Die JP H07 312807A offenbart eine Schaltschranktür mit den Merkmalen des Oberbegriffs des Anspruchs 1.

Es ist daher die Aufgabe der Erfindung eine Schaltschranktür der eingangs beschriebenen Art derart weiterzuentwickeln, dass sie einfach und damit kostengünstig in der Herstellung und darüber hinaus korrosionsunanfällig ist.

Diese Aufgabe wird durch eine Schaltschranktür mit den Merkmalen des Anspruchs 1 gelöst. Die abhängigen Ansprüche betreffen jeweils vorteilhafte Ausführungsformen der Erfindung.

Demgemäß ist vorgesehen, dass das Verstärkungsprofil im Querschnitt senkrecht zu seiner Längsrichtung eine U-Form aufweist bzw. ein U-Profil ist, mit zwei parallelen Flanschen, die auf der Innenseite über ihre freien Längskanten aufstehen und zumindest abschnittsweise stoffschlüssig mit der Innenseite verbunden sind.

Aufgrund der linienförmigen Auflage des Verstärkungsprofils auf der Innenseite der Schaltschranktür wird beim Lackiervorgang der unerwünschte Kapillareffekt weitestgehend vermieden und eine fast vollständige Beschichtung der Baugruppe erreicht und damit das Korrosionsrisiko gegenüber den aus dem Stand der Technik bekannten Lösungen erheblich reduziert.

Gegenüber Z-förmigen Verstärkungsprofilen, welche eine vergleichsweise große Auflageflache auf der Innenseite des Türblatts aufweisen, hat ein lediglich über seine schmalen Längskanten stoffschlüssig verbundenes, mithin aufgeschweißtes, U-förmiges Verstärkungsprofil bei geringerem Materialeinsatz eine erheblich größere Biege- und Torsionssteifigkeit. Das Verstärkungsprofil kann beispielsweise durch ein Laser- oder ein Widerstandsschweißverfahren auf der Innenseite des Türblatts aufgebracht werden, wie es beispielsweise aus der DE 102011 056 817 A1 bekannt ist. Durch die U-Form des Verstärkungsprofils wird in Verbindung mit dem Türblatt der Schaltschranktür ein geschlossenes Kastenprofil mit sehr hoher Steifigkeit erzeugt.

Das Verstärkungsprofil weist eine Befestigungsprofilseite auf, die sich senkrecht zu und zwischen den Flanschen erstreckt. Die Befestigungsprofilsseite kann für die Befestigung von Zusatzbauteilen dienen. Da folglich die Achse für die Befestigung der Zusatzbauteile bei der zuvor beschriebenen Ausführungsform zwischen den beiden Achsen der Längskanten, über welche das Verstärkungsprofil auf der Innenseite festgelegt ist, angeordnet ist, kann das Verstärkungsprofil einerseits sehr schmal ausgeführt werden und weist andererseits immer noch die erforderliche Verwindungssteifigkeit auf.

Die Befestigungsprofilseite kann mindestens eine Befestigungsaufnahme und vorzugsweise eine sich in Längsrichtung des Verstärkungsprofils erstreckende Systemlochung aus regelmäßig beabstandeten Befestigungsaufnahmen aufweisen.

Weiterhin ist vorgesehen, dass die Befestigungsprofilseite eine Unterbrechung sowie eine nutförmige Ausnehmung aufweist, die in die Unterbrechung mündet, wobei die nutförmige Ausnehmung in Richtung senkrecht zu den Flanschen eine Abmessung aufweist, die kleiner als ein senkrechter Abstand der Flansche zueinander ist. Dadurch kann die nutförmige Ausnehmung eine hinterschnittige Aufnahme für ein Befestigungsmittel sein.

Weiterhin ist vorgesehen, dass ein Erdungsbolzen mit seinem Bolzenkopf die nutförmige Ausnehmung hintergreift und mit seinem Gewinde über die nutförmige Ausnehmung aus dem Verstärkungsprofil herausragt. Der Erdungsbolzen kann beispielsweise dazu vorgesehen sein, um ein Erdungskabel elektrisch mit der Schaltschranktür zu kontaktieren. Aufgrund der stoffschlüssigen Verbindung zwischen dem Verstärkungsprofil und dem Türblatt der Schaltschranktür ist eine optimale elektrische Leitfähigkeit für den Potentialausgleich zwischen der Schaltschranktür und dem Verstärkungsprofil sichergestellt.

Auf der Innenseite des Türblatts können ein erstes und ein zweites Verstärkungsprofil unter einem Abstand und parallel zueinander angeordnet sein, wobei eine weitere Profilstrebe, beispielsweise ein Montagechassis, über ihre gegenüberliegenden Enden an der jeweiligen Befestigungsprofilseite der gegenüberliegenden Verstärkungsprofilseite festgelegt ist. Die weitere Profilstrebe kann einerseits dazu dienen, eine weitere Verstärkung des Türblatts und andererseits eine weitere Montageebene an der Innenseite der Schaltschranktür bereitzustellen.

Jede der beiden Befestigungsprofilseiten kann eine sich in Längsrichtung des Verstärkungsprofils erstreckende Systemlochung aus regelmäßig beabstandeten Befestigungsaufnahmen aufweisen, wobei die Befestigungsaufnahmen beider Systemlochungen in demselben Rastermaß angeordnet sein können.

Die weitere Profilstrebe kann ein Montagechassis sein, das über einen ersten Befestigungsflansch an seinem ersten Ende an dem ersten Verstärkungsprofil und über einen zweiten Befestigungsflansch an seinem dem ersten Ende gegenüberliegenden zweiten Ende an dem zweiten Verstärkungsprofil festgelegt ist.

Mindestens einer der parallelen Flansche des Verstärkungsprofils kann eine weitere Systemlochung aus regelmäßig beabstandeten Befestigungsaufnahmen aufweisen, so dass mindestens eine senkrecht zum Türblatt angeordnete Befestigungsebene gebildet ist.

Gemäß einem anderen Aspekt, nicht Teil der Erfindung, wird ein Verstärkungsprofil beschrieben, das aus einem elektrisch leitfähigen Material, beispielsweise im Wesentlichen aus Metall, besteht und im Querschnitt senkrecht zu seiner Längsrichtung eine U-Form aufweist, mit zwei parallelen Flanschen, deren freie Längskanten zumindest abschnittsweise in einer ersten Aufstandsebene angeordnet sind. Jede der beiden Längskanten kann mindestens einen wulstförmigen Vorsprung aufweisen, deren freie Enden in einer gegenüber der ersten Aufstandsebene erhabenen zweiten Aufstandsebene angeordnet sind.

Eine Abmessung des wulstförmigen Vorsprungs in Längsrichtung des Verstärkungsprofils kann sehr viel kleiner als eine Gesamtlänge des Verstärkungsprofils sein und vorzugsweise maximal ein Zehntel der Gesamtlänge des Verstärkungsprofils betragen.

Gemäß noch einem anderen Aspekt, nicht Teil der Erfindung, wird ein Verfahren zur stoffschlüssigen Verbindung eines Verstärkungsprofils an der Innenseite einer Schaltschranktür beschrieben, das die Schritte aufweist:
- Bereitstellen einer Schaltschranktür aus einem elektrisch leitfähigen Material, insbesondere Metall, sowie mindestens eines Verstärkungsprofils der zuvor beschriebenen Art;
- Aufsetzen des Verstärkungsprofils über seine wulstförmigen Vorsprünge auf die Innenseite des Türblatts der Schaltschranktür, so dass das Verstärkungsprofil das Türblatt über die wulstförmigen Vorsprünge elektrisch kontaktiert und die erste Aufstandsebene der Längskanten unter einem Abstand zu dem Türblatt angeordnet ist; und
- Bereitstellen einer elektrischen Potentialdifferenz zwischen dem Verstärkungsprofil und dem Türblatt, wobei ein Schweißstrom durch die wulstförmigen Vorsprünge durchgeleitet wird und die wulstförmige Vorsprünge sowie das Türblatt im Bereich der zweiten Aufstandsfläche aufschmelzen und eine stoffschlüssige Verbindung zwischen dem Verstärkungsprofil und dem Türblatt hergestellt wird.

Das Aufschmelzen kann das Annähern der ersten Aufstandsebene der Längskanten an das Türblatt aufweisen.

Der Schweißstrom kann unterbrochen werden, wenn bei dem Annähern die erste Aufstandsebene auf das Türblatt trifft. Eine Kontaktierung der ersten Aufstandsebene mit dem Türblatt kann bei konstantem Schweißstrom über einen Abfall der Potentialdifferenz erfasst und daraufhin der Schweißstrom unterbrochen werden.

Weitere Einzelheiten der Erfindung werden anhand der nachstehenden Figuren erläutert. Dabei zeigt:
- Figur 1: eine erste Ausführungsform einer Schaltschranktür nach dem Stand der Technik;
- Figur 2: eine zweite Ausführungsform einer Schaltschranktür nach dem Stand der Technik;
- Figur 3: ein Verstärkungsprofil gemäß einer Ausführungsform der Erfindung in perspektivischer Darstellung;
- Figur 4: eine Detailansicht einer Schaltschranktür gemäß einer Ausführungsform der Erfindung; und
- Figur 5: eine perspektivische Darstellung einer weiteren Ausführungsform einer Schaltschranktür gemäß der vorliegenden Erfindung.

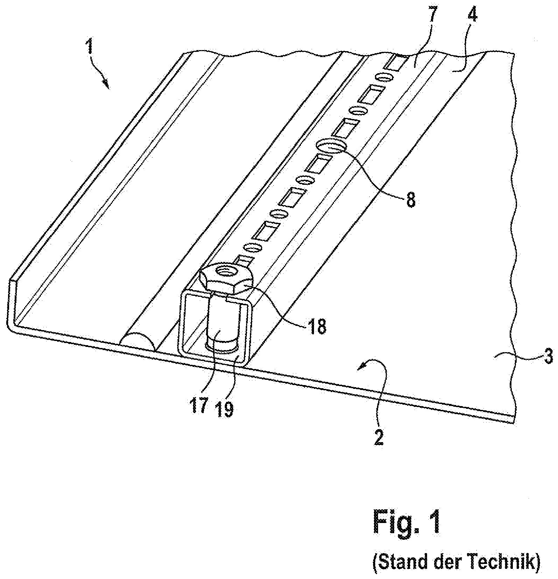

Bei der in Figur 1 gezeigten Schaltschranktür 1 gemäß dem Stand der Technik ist an der Innenseite 2 des Türblatts 3 der Schaltschranktür 1 ein Verstärkungsprofil 4 angeordnet und über eine Bolzenverbindung 17, 18 auf der Innenseite 2 aufgeschraubt. Das Verstärkungsprofil 4 ist dazu als ein sogenannter Türrohrrahmen mit rechteckigem Querschnitt ausgebildet, von dem eine seiner vier Umfangsseiten eine Aufstandsseite 19 bildet, über die der Türrohrrahmen 4 flächig auf der Innenseite 2 des Türblatts 3 aufliegt. Der Bolzen 17 ist ein Schweißbolzen, der auf der Innenseite 2 des Türblatts 3 aufgeschweißt ist und sich durch fluchtende Durchbrüche in der Aufstandsseite 19 und der dieser unter einem Abstand gegenüberliegenden und parallel angeordneten Befestigungsprofilseite 7 hindurch erstreckt. Das freie Ende des Schweißbolzens 17, mit welchem der Schweißbolzen 17 durch die Befestigungsprofilseite 7 vorsteht, weist ein Gewinde auf, über das eine Mutter 18 auf den Bolzen 17 aufgeschraubt ist, um den Türrohrrahmen 4 an der Innenseite 2 festzulegen.

Die Montage des Türrohrrahmens 4 an der Innenseite 2 ist somit vergleichsweise aufwendig. Der Türrohrrahmen 4 ist nicht nur materialintensiv in der Herstellung und damit teuer, vielmehr ist es allein für die Befestigung des Türrohrahmens erforderlich, dass in einem separaten Herstellungsschritt des die Schaltschranktür 1 bildenden Flachteils die für die Befestigung des Türrohrrahmens 4 erforderlichen Schweißbolzen 17 auf der Innenseite 2 des Türblatts 3 aufgebracht und für die Tauchlackierung zumindest deren Gewinde angeklebt oder anderweitig vor dem Kontakt mit dem Tauchlack geschützt werden.

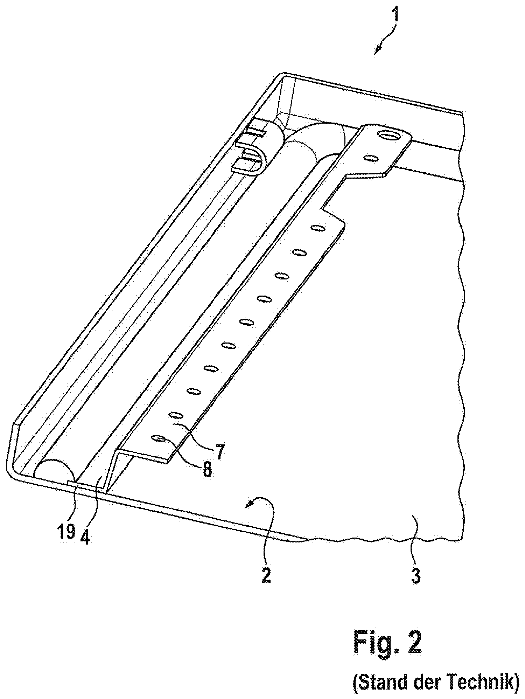

In Abwandlung davon ist bei der in Figur 2 gezeigten Ausführungsform das Verstärkungsprofil 4 als eine Z-Umkantung ausgebildet, die ebenfalls eine unter einem Abstand zur Innenseite 2 des Türblatts 3 angeordnete Befestigungsprofilseite 7 mit Befestigungsaufnahmen 8 aufweist. Auch die Z-Umkantung des Verstärkungsprofils 4 weist eine Aufstandsseite 19 auf, über welche das Verstärkungsprofil 4 an der Innenseite 2 des Türblatts 3 großflächig anliegt. Abweichend von der in Figur 1 gezeigten Ausführungsform ist bei der in Figur 2 gezeigten Ausführungsform das Verstärkungsprofil 4 über die Aufstandsseite 19 an der Innenseite 2 aufgeschweißt.

Beide der in den Figuren 1 und 2 gezeigten Ausführungsformen gemäß dem Stand der Technik haben den Nachteil, dass sie über vergleichsweise großflächige Aufstandsseiten 19 auf der Innenseite 2 des Türblatts 3 aufliegen, wobei aufgrund produktionsseitiger Fertigungstoleranzen die Anlage der Abstandsseite 19 auf der Innenseite 2 niemals vollflächig sein kann, so dass zumindest abschnittsweise und lokal Spalte zwischen der Abstandsseite 19 und der Innenseite 2 ausgebildet sein können, welche bei der Tauchlackierung der Schaltschranktür aufgrund des Kapillareffekts dazu führen können, dass Lackierungsrückstände in den Spalten zurückbleiben, oder eine vollflächige Lackierung innerhalb der Spalte unterbleibt und somit die Schaltschranktür im Bereich der Aufstandsseite 19 korrosionsanfällig ist.

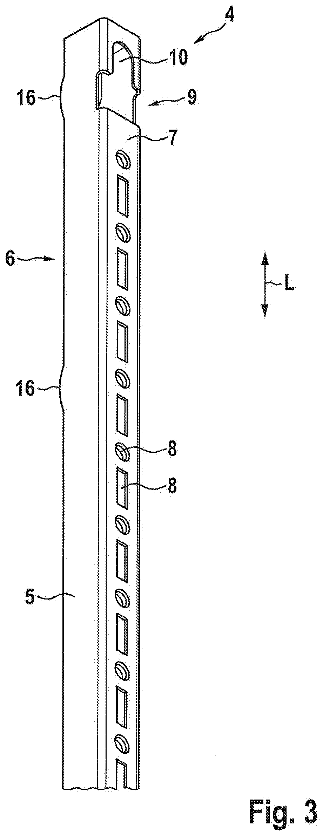

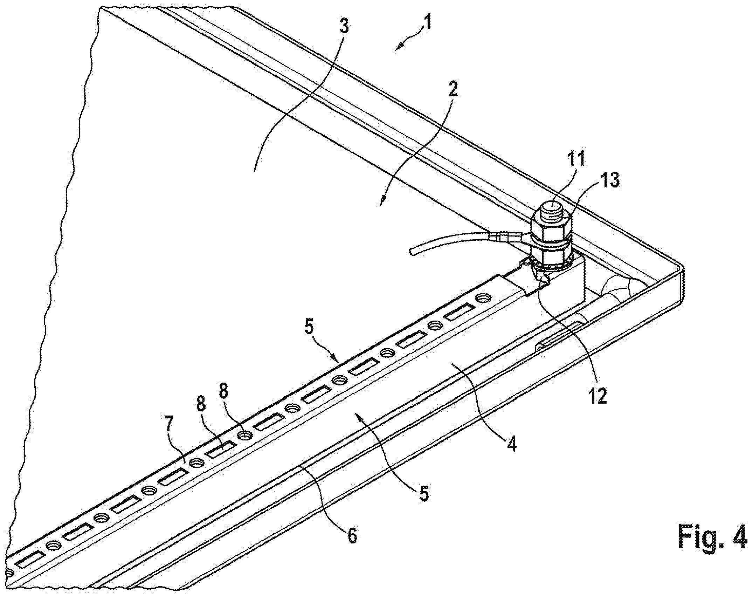

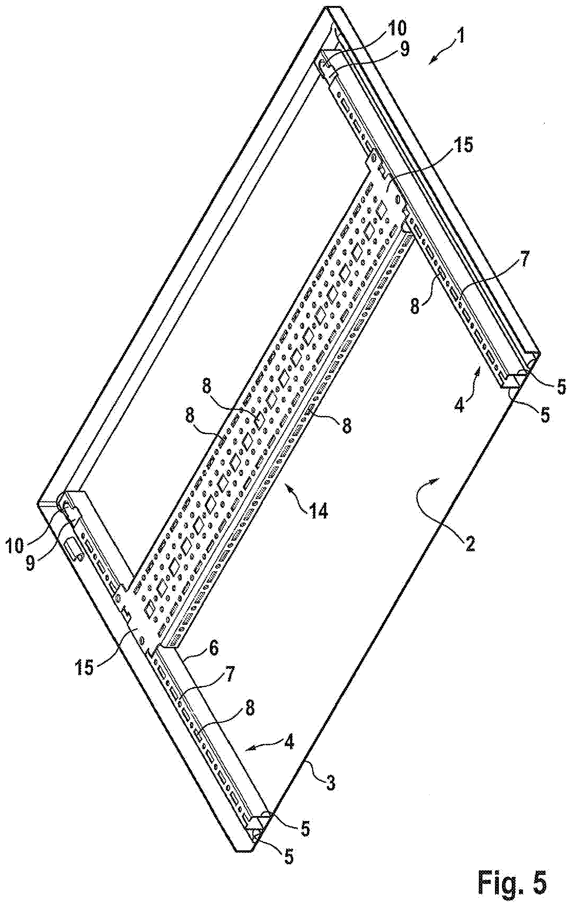

Figur 3 zeigt eine beispielhafte Ausführungsförm eines erfindungsgemäßen Verstärkungsprofils 4, welches im Querschnitt senkrecht zu seiner Längsrichtung L eine U-Form aufweist bzw. als ein U-Profil ausgebildet ist. Insbesondere weist das Verstärkungsprofil 4 zwei parallele Flansche 5 auf, die unter einem Abstand zueinander angeordnet und über eine sich senkrecht zu den Flanschen 5 erstreckende Befestigungsprofilseite 7 miteinander verbunden sind. Die parallelen Flansche 5 weisen freie Längskanten 6 auf, über welche sie auf der Innenseite 2 (vergleiche Figuren 4 und 5) einer Schaltschranktür zur Anlage gebracht und mit dem Türblatt der Schaltschranktür verschweißt werden zu können.

Die in Figur 3 gezeigte Ausführungsform ist insbesondere für die stoffschlüssige Verbindung des gezeigten Verstärkungsprofils 4 mit dem Türblatt 3 einer Schaltschranktür im Rahmen des Widerstandsschweißverfahrens ausgebildet und weist dazu entlang ihrer Längsrichtung L an den freien Längskanten 6 mehrere wulstförmige Vorsprünge 16 auf. Die wulstförmigen Vorsprünge 16 weisen in der Längsrichtung L des Verstärkungsprofils 4 eine Abmessung auf, die wesentlich geringer als die Länge des Verstärkungsprofils 4 ist. Wenn das gezeigte Verstärkungsprofil 4 auf der Innenseite des Türblatts 3 einer Schaltschranktür aufgesetzt ist, kontaktiert es das Türblatt 3 der Schaltschranktür ausschließlich über die wulstförmigen Vorsprünge 16, so dass beim Verschweißen des Verstärkungsprofils 4 mit dem Türblatt 3 im Wege des Widerstandsschweißens der Schweißstrom alleine über die wulstförmigen Vorsprünge 16 zwischen dem Verstärkungsprofil 4 und dem Türblatt 3 fließt, und somit die wulstförmigen Vorsprünge 16 aufgrund des Schweißstroms aufschmelzen, ebenso wie das Türblatt 3 im Bereich der wulstförmigen Vorsprünge 16, so dass eine stoffschlüssige Verbindung zwischen dem Verstärkungsprofil 4 und dem Türblatt 3 hergestellt wird.

Während des Widerstandsschweißens wird das Verstärkungsprofil 4 in Richtung des Türblatts mit einer Kraft beaufschlagt, so dass sich das Verstärkungsprofil 4 bei aufschmelzenden wulstförmigen Vorsprüngen 16 dem Türblatt 3 annähert, bis das Verstärkungsprofil 4 vorzugsweise über die gesamte Länge seiner Längskanten 6 auf der Innenseite des Türblatts aufliegt. Mithin bildet dann das U-förmige Verstärkungsprofil mit dem Türblatt eine im Querschnitt senkrecht zur Längsrichtung des Verstärkungsprofils 4 umlaufend geschlossene Versteifungsstruktur nach der Art eines Türrohrrahmens, jedoch bei weitaus geringerem Materialeinsatz und im Übrigen nicht nur kraftschlüssiger, sondern auch stoffflüssiger Verbindung zwischen Verstärkungsprofil und Türblatt. Gegenüber einem Türrohrrahmen wird somit bei geringerem Materialeinsatz trotzdem eine höhere mechanische Festigkeit, insbesondere Steifigkeit des Türblatts 3 erreicht.

Das Verstärkungsprofil 4 weist entlang seiner die Flansche 5 miteinander verbindenden Befestigungsprofilseite 7 in Längsrichtung L regelmäßig beabstandete Befestigungsaufnahmen 8 auf, welche eine Systemlochung bilden. Der Ausdruck "Systemlochung" bedeutet im vorliegenden Fall insbesondere, dass der Abstand in Längsrichtung L zwischen Befestigungsaufnahmen 8 gleicher Art einem ganzzahligen Vielfachen eines konstanten Rastermaßes entspricht.

An seinem Längsende weist das Verstärkungsprofil 4, insbesondere die Befestigungsprofilseite 7 eine Unterbrechung sowie eine nutförmige Ausnehmung 10 auf. Die nutförmige Ausnehmung 10 mündet in die Unterbrechung 9 und weist in Richtung senkrecht zu den Flanschen 5 eine Abmessung auf, die kleiner als der senkrechte Abstand der Flansche 5 zueinander ist. Mithin bilden die die nutförmige Ausnehmung 10 umrandenden Befestigungsprofilseiten im Bereich der nutförmigen Ausnehmung 10 einen Hinterschnitt zur Festlegung eines Befestigungsmittels, beispielsweise eines Erdungsbolzens 11, wie dies in Figur 4 gezeigt ist. Der Erdungsbolzen 11 weist einen Bolzenkopf 12 auf, der als Mehrkant ausgebildet ist, wobei ein Abstand zwischen gegenüberliegenden Seiten des mehrkantförmigen Bolzenkopfes 12 im Wesentlichen einem Innenabstand der gegenüberliegenden Flansche 5 des Verstärkungsprofils 4 entspricht, oder geringfügig kleiner ist, so dass der Bolzenkopf 12 in einer definierten Stellung zwischen den Flanschen 5 verdrehsicher aufgenommen werden kann. Wie in Figur 4 gezeigt ist, kann die in die Unterbrechung 9 mündende nutförmige Ausnehmung 10 beispielsweise dazu dienen, um mit Hilfe eines Erdungsbolzens 11 ein Erdungskabel an dem Verstärkungsprofil 4 elektrisch kontaktierend festzulegen.

Die in Figur 5 gezeigte Ausführungsform einer Schaltschranktür 1 weist zwei parallel und in einem Abstand zueinander angeordnete Verstärkungsprofile 4 auf, zwischen denen sich eine weitere Profilstrebe 14, insbesondere ein Montagechassis, erstreckt, welches über jeweils einen Befestigungsflansch 15 an seinen gegenüberliegenden Enden mit jeweils einem der Verstärkungsprofile 4 verbunden ist. Das Montagechassis 14 kann einerseits dazu dienen, um die Schaltschranktür 1 weiter zu verstärken und andererseits kann mit Hilfe des Montagechassis 14 eine weitere Montageebene im Bereich zwischen den Verstärkungsprofilen 4 bereitgestellt werden, etwa für den Innenausbau des Schaltschranks. Auch das Montagechassis kann, wie es grundsätzlich aus dem Stand der Technik bekannt ist, im Wesentlichen U-förmig ausgebildet sein und an jeder seiner drei Profilseiten eine Systemlochung aus regelmäßig beabstandeten Befestigungsaufnahmen 8 aufweisen.

### Bezugszeichenliste:

- 1: Schaltschranktür
- 2: Innenseite
- 3: Türblatt
- 4: Verstärkungsprofil
- 5: Flansch
- 6: Längskante
- 7: Befestigungsprofilseite
- 8: Befestigungsaufnahme
- 9: Unterbrechung
- 10: Ausnehmung
- 11: Erdungsbolzen
- 12: Bolzenkopf
- 13: Gewinde
- 14: Profilstrebe
- 15: Befestigungsflansch
- 16: wulstförmiger Vorsprung
- 17: Schweißbolzen
- 18: Mutter
- 19: Aufstandsseite
- L: Längsrichtung

## Patentansprüche

1. Schaltschranktür (1) für ein Schaltschrankgehäuse, wobei die Schaltschranktür (1) an der Innenseite (2) ihres Türblatts (3) mindestens ein Verstärkungsprofil (4) aufweist, das im Querschnitt senkrecht zu seiner Längsrichtung (L) eine U-Form aufweist, mit zwei parallelen Flanschen (5), die auf der Innenseite (2) über ihre freien Längskanten (6) aufstehen und zumindest abschnittsweise stoffschlüssig mit der Innenseite (2) verbunden sind, **dadurch gekennzeichnet, dass** das Verstärkungsprofil (4) eine Befestigungsprofilseite (7) aufweist, wobei sich die Befestigungsprofilseite (7) senkrecht zu und zwischen den Flanschen (5) erstreckt, wobei die Befestigungsprofilseite (7) eine Unterbrechung (9) sowie eine nutförmige Ausnehmung (10) aufweist, die in die Unterbrechung (9) mündet, wobei die nutförmige Ausnehmung (10) in Richtung senkrecht zu den Flanschen (5) eine Abmessung aufweist, die kleiner als ein senkrechter Abstand der Flansche (5) zueinander ist, und wobei ein Erdungsbolzen (11) mit seinem Bolzenkopf (12) die nutförmige Ausnehmung (10) hintergreift und mit seinem Gewinde (13) über die nutförmige Ausnehmung (10) aus dem Verstärkungsprofil (4) herausragt

2. Schaltschranktür (1) nach Anspruch 1, bei der die Befestigungsprofilseite (7) mindestens eine Befestigungsaufnahme (8) und vorzugsweise eine sich in Längsrichtung (L) des Verstärkungsprofils (4) erstreckende Systemlochung aus regelmäßig beabstandeten Befestigungsaufnahmen (8) aufweist.

3. Schaltschranktür (1) nach Anspruch 1 oder 2, bei dem auf der Innenseite (2) des Türblatts (3) ein erstes und ein zweites der Verstärkungsprofile (4) unter einem Abstand und parallel zueinander angeordnet sind, wobei eine weitere Profilstrebe (14) über ihre gegenüber liegenden Enden an der jeweiligen Befestigungsprofilseite (7) der gegenüber liegenden Verstärkungsprofile (4) festgelegt ist.

4. Schaltschranktür (1) nach Anspruch 3, bei der jede der beiden Befestigungsprofilseiten (7) eine sich in Längsrichtung (L) des Verstärkungsprofils (4) erstreckende Systemlochung aus regelmäßig beabstandeten Befestigungsaufnahmen (8) aufweist, wobei die Befestigungsaufnahmen (8) beider Systemlochungen in demselben Rastermaß angeordnet sind.

5. Schaltschranktür (1) nach Anspruch 3 oder 4, bei der die weitere Profilstrebe (14) ein Montagechassis ist, das über einen ersten Befestigungsflansch (15) an seinem ersten Ende an dem ersten Verstärkungsprofil (4) und über einen zweiten Befestigungsflansch (15) an seinem dem ersten Ende gegenüber liegenden zweiten Ende an dem zweiten Verstärkungsprofil (4) festgelegt ist.

6. Schaltschranktür (1) nach einem der vorangegangenen Ansprüche, bei dem mindestens einer der parallelen Flansche (5) des Verstärkungsprofils (4) eine weitere Systemlochung aus regelmäßig beabstandeten Befestigungsaufnahmen (8) aufweist, so dass eine senkrecht zum Türblatt (3) angeordnete Befestigungsebene gebildet ist.

## Claims

1. Switch cabinet door (1) for a switch cabinet housing, the switch cabinet door (1) having on the inner side (2) of its door leaf (3) at least one reinforcing profile (4) which has a U-shape in cross-section perpendicular to its longitudinal direction (L), with two parallel flanges (5), which stand up on the inner side (2) via their free longitudinal edges (6) and are connected to the inner side (2) at least in sections in a material-fitting manner, **characterized in that** the reinforcing profile (4) has a mounting profile side (7), wherein the mounting profile side (7) extends perpendicularly to and between the flanges (5), the mounting profile side (7) having a gap (9) and a groove-shaped recess (10) opening into the gap (9), the groove-shaped recess (10) having a dimension in the direction perpendicular to the flanges (5), which is smaller than a perpendicular distance of the flanges (5) to each other, and wherein a grounding bolt (11) engages with its bolt head (12) behind the groove-shaped recess (10) and protrudes with its thread (13) from the reinforcing profile (4) via the groove-shaped recess (10).

2. Switch cabinet door (1) according to claim 1, in which the mounting profile side (7) has at least one mounting receptacle (8) and preferably a system perforation of regularly spaced mounting receptacles (8), the system perforation extending in the longitudinal direction (L) of the reinforcing profile (4).

3. Switch cabinet door (1) according to claim 1 or 2, in which a first and a second of the reinforcing profiles (4) are arranged on the inner side (2) of the door leaf (3) at a distance from and parallel to each other, a further profile strut (14) being fixed via its opposite ends to the respective mounting profile side (7) of the reinforcing profiles (4) opposite each other.

4. Switch cabinet door (1) according to claim 3, in which each of the two mounting profile sides (7) has a system perforation of regularly spaced mounting receptacles (8), the system perforation extending in the longitudinal direction (L) of the reinforcing profile (4), wherein the mounting receptacles (8) of both system perforations are arranged in the same grid dimension.

5. Switch cabinet door (1) according to claim 3 or 4, in which the further profile strut (14) is a mounting chassis which is fixed to the first reinforcing profile (4) via a first mounting flange (15) at its first end and to the second reinforcing profile (4) via a second mounting flange (15) at its second end opposite the first end.

6. Switch cabinet door (1) according to any of the preceding claims, in which at least one of the parallel flanges (5) of the reinforcing profile (4) has a further system perforation of regularly spaced mounting receptacles (8), so that a mounting plane arranged perpendicular to the door leaf (3) is formed.

## Revendications

1. Porte d'armoire de commande (1) pour un boîtier d'armoire de commande, la porte d'armoire de commande (1) comprenant, sur le côté interne (2) de son battant (3), au moins un profilé de renfort (4), qui présente, en section transversale perpendiculaire à sa direction longitudinale (L), une forme de U, avec deux brides parallèles (5), qui se tiennent sur le côté interne (2) par l'intermédiaire de leurs arêtes longitudinales libres (6), et qui sont reliées, au moins à certains endroits, par liaison de matière, avec le côté interne (2) **caractérisée en ce que** le profilé de renfort (4) comprend un côté de profilé de fixation (7), le côté de profilé de fixation (7) s'étendant perpendiculairement et entre les brides (5), le côté de profilé de fixation (7) comprenant une interruption (9) ainsi qu'un évidement en forme de rainure (10), qui débouche dans l'interruption (9), l'évidement en forme de rainure (10) présentant, dans une direction perpendiculaire aux brides (5), une dimension qui est inférieure à une distance perpendiculaire des brides (5) entre elles, et un boulon de mise à la terre (11) avec sa tête de boulon (12) s'accrochant par l'arrière à l'évidement en forme de rainure (10) et dépassant, avec son filetage (13), de l'évidement en forme de rainure (10) hors du profilé de renfort (4).

2. Porte d'armoire de commande (1) selon la revendication 1, dans laquelle le côté de profilé de fixation (7) comprend au moins un logement de fixation (8) et de préférence une perforation de système s'étendant dans la direction longitudinale (L) du profilé de renfort (4) et constituée de logements de fixation (8) disposés à intervalles réguliers.

3. Porte d'armoire de commande (1) selon la revendication 1 ou 2, dans laquelle, sur le côté interne (2) du battant (3), sont disposés, à distance et parallèlement entre eux, un premier et un deuxième profilés de renfort (4), une autre entretoise de profilé (14) étant fixée, par l'intermédiaire de ses extrémités opposées, au côté de profilé de fixation (7) correspondant des profilés de renfort (4) opposés.

4. Porte d'armoire de commande (1) selon la revendication 3, dans laquelle chacun des côtés de profilé de fixation (7) comprend une perforation de système s'étendant dans la direction longitudinale (L) du profilé de renfort (4) et constituée de logements de fixation (8) disposés à intervalles réguliers, les logements de fixation (8) des deux perforations de système étant disposés avec les mêmes dimensions de trame.

5. Porte d'armoire de commande (1) selon la revendication 3 ou 4, dans laquelle l'autre entretoise de profilé (14) est un châssis de montage qui est fixé, par l'intermédiaire d'une première bride de fixation (15), au niveau de sa première extrémité, au premier profilé de renfort (4) et, par l'intermédiaire d'une deuxième bride de fixation (15) au niveau de la deuxième extrémité opposée à la première extrémité, au deuxième profilé de renfort (4).

6. Porte d'armoire de commande (1) selon l'une des revendications précédentes, dans laquelle au moins une des brides parallèles (5) du profilé de renfort (4) comprend une autre perforation de système constituée de logements de fixation (8) disposés à intervalles réguliers, de façon à former un plan de fixation perpendiculaire au battant (3).
